# EUROPEAN PATENT SPECIFICATION

(11) **EP 4 230 429 B1**
(45) Date of publication and mention of the grant of the patent: **08.04.2026**
(21) Application number: 22157335.5
(22) Date of filing: 17.02.2022
(51) Int. Cl.: B60B 9/00, B60B 27/00

(54) **A DAMPER INLAY FOR A VEHICLE AND A VEHICLE COMPRISING SAID DAMPER INLAY**
DÄMPFEREINLAGE FÜR EIN FAHRZEUG UND FAHRZEUG MIT BESAGTER DÄMPFEREINLAGE
INCRUSTATION D'AMORTISSEUR POUR VÉHICULE ET VÉHICULE COMPRENANT LADITE INCRUSTATION D'AMORTISSEUR

(43) Date of publication of application: 23.08.2023
(73) Proprietor: BASF Polyurethanes GmbH, 49448 Lemförde (DE)
(72) Inventor: HINDERINK, Matthias, 49448 Lemförde (DE)
(74) Representative: BASF IP Association

(56) References cited:
- EP-A1- 3 789 629
- WO-A1-2021/043916
- US-A1- 2013 187 320
- US-A1- 2016 003 322

## Description

The invention relates to a damper inlay for a vehicle according to the preamble of claim 1.

Damper inlays of the aforementioned kind are commonly used in the commercial vehicle industry, where they act so as to allow the vibrations of respective swing masses to decay quickly and are potentially classified as safety-relevant products. In vehicles, the tire-wheel suspension determines the character of the vehicle in terms of driving dynamics and comfort through its suspension and damping tuning. Depending on the geometric design of the vehicle axle, damper units are connected to the wheel suspension, for example, either at the upper end or at both ends via an elastic mounting, wherein hybrid damper inlays comprising plastic and metal components are being used as damping elements.

Hybrid damper inlays combine different material and geometrical properties to influence the overall damping behavior in a preferred way. In particular with regard to combined radial and axial damping properties, however, known damper inlays still leave room for improvements.

From US 2016/003322 A1, an axially damped hydraulic mount assembly is know.

As a consequence, it was an object of the invention to provide a damper inlay of the initially mentioned type which overcomes the aforementioned problems as much as possible. In particular, it was an object of the invention to provide an improved damper inlay that comprises beneficial axial and radial damping properties, is easy to manufacture and may be installed conveniently into the housing.

The invention attains the aforementioned object by suggesting a damper inlay according to claim 1. With the help of said axial damping elements, the damping properties of the damper inlay may be influenced beneficially. In particular, said inlay can be easily inserted into a damper housing and based on the material properties of the axial damping element, and the dimensions of its components, the damping properties of the damper inlay may be influenced and adjusted with regard to the intended application. The first and second axial damping elements are separate elements in particular comprising a different material than the spacer and the damping body.

According to a preferred embodiment, the core element is formed as a disc, in particular as a washer and/or wherein the core element comprises a centrally arranged opening, said opening extending in particular along a longitudinal axis of the damper inlay. According to yet another preferred embodiment, the damper inlay comprises a sleeve, said sleeve radially surrounding the damping body. With the help of said sleeve, the damper inlay may be inserted into the damper housing more conveniently.

Preferably, the at least one first axial damping element or second axial damping element is formed from one of the following: microcellular polyurethane, in particular volume compressible microcellular polyurethane. A suitable material in this regard is for example Cellasto, a trademark of BASF.

Microcellular polyurethane elastomers which, in a preferred embodiment, have a density according to DIN 53420 of 200 kg/m3 to 1100 kg/m3, preferably 300 kg/m3 to 800 kg/m3, a tensile strength according to DIN 53571 of 2 N/mm2, preferably 2 N/mm2 to 8 N/mm2, an elongation according to DIN 53571 of 300%, preferably 300% to 700%, and a tear strength according to DIN 53515 of preferably 8 N/mm to 25 N/mm are particularly preferred.

The elastomers are preferably microcellular elastomers on the basis of polyisocyanate polyaddition products, preferably having cells with a diameter of 0.01 mm to 0.5 mm, particularly preferably 0.01 to 0.15 mm.

Elastomers on the basis of polyisocyanate polyaddition products and the production thereof are known in general and described numerously, for example in EP A 62 835, EP A 36 994, EP A 250 969, DE A 195 48 770 and DE A 195 48 771.

Production customarily takes place by reacting isocyanates with compounds which are reactive to isocyanates.

The elastomers on the basis of cellular polyisocyanate polyaddition products are customarily produced in a mold in which the reactive starting components are reacted with one another. Suitable molds here are generally customary molds, for example metal molds, which, on the basis of their shape, ensure the three dimensional shape according to the invention.

The polyisocyanate polyaddition products can be produced according to generally known methods, for example by the following starting substances being used in a single or twostage process:
(a) isocyanate,
(b) compounds reactive to isocyanates,
(c) water and optionally
(d) catalysts,
(e) blowing agents and/or
(f) auxiliary and/or additional substances, for example polysiloxanes and/or fatty acid sulfonates.

The surface temperature of the inner wall of the mold is customarily 40°C to 95°C, preferably 50°C to 90°C. The production of the molded parts is advantageously carried out at an NCO/OH ratio of 0.85 to 1.20, wherein the heated starting components are mixed and brought in a quantity corresponding to the desired molded part density into a heated, preferably tightly closing molding tool. The molded parts are cured for 5 minutes to 60 minutes and then can be removed from the mold. The quantity of the reaction mixture introduced into the molding tool is customarily dimensioned in such a manner that the molded bodies obtained have the density already presented. The starting components are customarily introduced into the molding tool at a temperature of 15°C to 120°C, preferably of 30°C to 110°C. The degrees of compression for producing the molded bodies lie between 1.1 and 8, preferably between 2 and 6. The cellular polyisocyanate polyaddition products are expediently produced according to the "one shot" method with the aid of high pressure technology, low pressure technology or in particular reaction injection molding technology (RIM) in open or preferably closed molding tools. The reaction is carried out in particular by compression in a closed molding tool. The reaction injection molding technology is described, for example, by H. Piechota and H. Röhr in "Integralschaumstoffe", Carl Hanser-Verlag, Munich, Vienna 1975; D.J. Prepelka and J.L. Wharton in Journal of Cellular Plastics, March/April 1975, pages 87 to 98 and U. Knipp in Journal of Cellular Plastics, March/April 1973, pages 76-84.

According to yet another preferred embodiment, the sleeve and/or the spacer comprises or is made of from one of the following materials: molding plastic materials, in particular polyamide or polypropylene, fiber reinforced plastic, in particular carbon fiber reinforced plastic or glass fiber reinforced plastic. The use of plastic for sleeves and spacers has been found to be beneficial to easily and cost-effectively manufacture said parts of the damper inlay, wherein this choice of material allows for a convenient assembly into the damper inlay housing. The molding plastic materials may be selected as required.

Preferably, the damping body comprises or is made of polyurethane (PUR), in particular pourable elastomers like "Elasturan" or thermoplastic polyurethane (TPU) like "Elastollan", trademarks of BASF. These materials have been found to be beneficial to adjust the radial damping properties of the damper inlay as required. According to yet another preferred embodiment, the spacer is molded around the core element. While the number of overall parts is reduced, by molding the spacer around the core element a durable connection of the parts is achieved.

According to yet another preferred embodiment, the first axial damping element abuts against the first axial contact surface of the damping body and the second axial damping element abuts against the second axial contact surface of the damping body. In other words, the damping properties of the damper inlay in the axial direction are influenced by the axial damping element and the damping body that both provide axial damping.

According to yet another preferred embodiment, the spacer comprises an upper section and a lower section, wherein the upper section and/or the lower section comprise at least one clip for clamping the upper section and/or the lower section to at least one bore arranged in the core element. This design provides an alternative to molding the spacer around the core element. In other words, by clamping the sections of the spacer to the core element, a secure connection with the core element is established.

According to yet another preferred embodiment, the damping body is molded around the spacer. In this way, damping body and spacer form a durable bond with each other. According to yet another preferred embodiment, one or both of the axial damping elements are bonded to the damping body. Thereby, the axial damping elements are secured to the damping body.

Preferably, the damping body comprises a centering bead which surrounds at least one of the axial contact surfaces, wherein said centering bead is configured for centering the first or second dampening element relative to the damping body. With the help of this, the alignment of the components with respect to one another is improved.

The first axial damping element abuts against the first axial contact surface of the spacer and the second axial damping element abuts against the second axial contact surface of the spacer. In this alternative embodiment, the axial damping elements directly abut against the spacer. With the help of this, a more compact damper design can be achieved.

According to yet another preferred embodiment, the spacer comprises fastening means, said fastening means being configured for attaching the first and/or second axial damping element to the spacer. With the help of said fastening means, a durable damper unit is established. According to yet another preferred embodiment, the fastening means comprise a clip and wherein the first and/or second axial damping element comprises a radial protrusion, said radial protrusion being configured for providing a form-fit connection with said clip.

Preferably, the first axial contact surface and/or the second axial contact surface comprises a wavelike surface. With the help of said wavelike surface, the damping properties of the damper inlay can be adjusted. According to yet another preferred embodiment, the damping body and/or the sleeve comprises two half shells. These half shells allow for a convenient mountability of the damping body and the sleeve to the remaining parts of the damper inlay.

Preferably, the half shell of the sleeve and the half shell of the damping body are splashed together, vulcanized or molded, in particular injection molded. In other words, the half shells of the sleeve and the half shells of the damping body form a unit wherein, for example, two half shells comprising the damping body and the sleeve can be attached to one another to form a radial damping means of the damper inlay. Preferably, the spacer comprises a half shell fastening means, and wherein the half shell fastening means is configured for fastening half shells of the damping body to the spacer. With the help of this, the half shells can be releasably mounted to the spacer.

According to yet another preferred embodiment, the half shell fastening means comprises a nob for connecting the half shells to the core. The utilization of a nob has been found to be beneficial for the proposed application.

According to yet another preferred embodiment, the sleeve half shells comprise an attachment means for attaching the half shells of the sleeve to one another. Preferably, the attachment means comprises a clip, and wherein the clip is configured to attach the sleeve half shells to one another. With the help of said attachment means, in particular the clip, the half shells can be durably and securely attached to one another.

In a further aspect, the invention relates to a damper unit for a vehicle comprising a damper housing for accommodating a damper inlay and at least one damper inlay. According to the invention, the damper inlay is designed according to at least one of the previous embodiments. The damper unit take advantage of the same benefits and preferred embodiments as the damper inlay according to the invention and vice versa. In this regard, and in order to avoid unnecessary repetitions, reference is made to the above explanations.

For a more complete understanding of the invention, the invention will now be described in detail with reference to the accompanying drawings. The detailed description will illustrate and describe what is considered as a preferred embodiment of the invention.

It is therefore intended that the invention may not be limited to the exact form and detail shown and described herein, nor to anything less than the whole of the invention disclosed herein and as claimed hereinafter.

In particular, any reference signs in the claims shall not be construed as limiting the scope of the invention. The wording "comprising" does not exclude other elements or steps. The wording "a" or "an" does not exclude a plurality.

This invention will now be described with reference to the accompanying drawings which illustrate, by way of example and not by way of limitation, one of several possible embodiments of damper inlays as proposed herein, and wherein:
- Fig. 1a:: shows a damper inlay according to a first embodiment in a sectional view;
- Fig. 1b:: shows an exploded view of the core element and the spacer;
- Fig. 1c:: shows the spacer attached to the core in a perspective view;
- Fig. 2:: shows a damper arrangement comprising a damper inlay according to the first embodiment in a sectional view;
- Fig. 3:: shows a damper inlay according to a second embodiment in a sectional view;
- Fig. 4:: shows a damper arrangement comprising a damper inlay according to the second embodiment in a sectional view;
- Fig. 5:: shows a damper inlay according to a third embodiment in a sectional view; and
- Fig. 6:: shows a damper arrangement comprising a damper inlay according to the third embodiment in a sectional view.

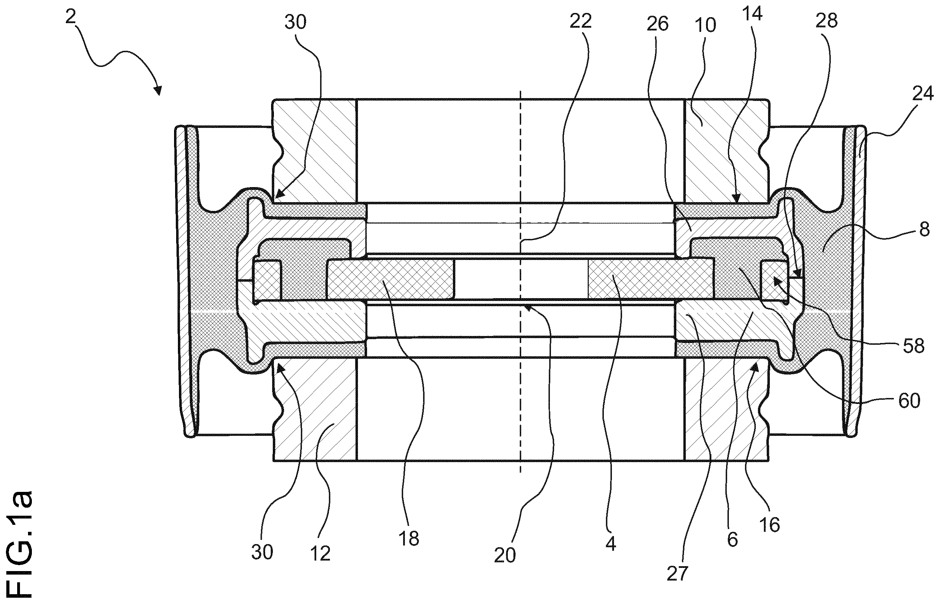

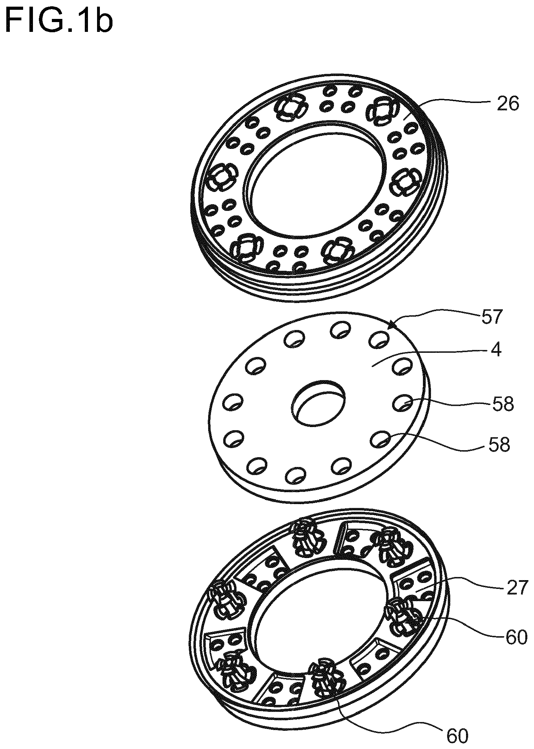

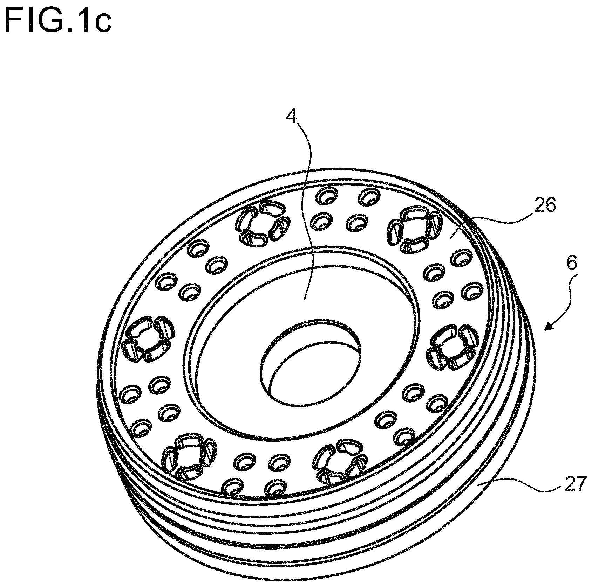

Fig. 1 shows a damper inlay 2 for a vehicle. The damper inlay 2 comprises a core element 4. The core element 4 is formed as a disc 18, in particular as a washer 18. The core 4 comprises a bore ring 57 (see Figs. 1b and 1c). The bore ring 57 comprises bores 58. The core element 4 comprises a centrally arranged opening 20. The centrally arranged opening 20 extends along a longitudinal axis 22 of the damper inlay 2. The damper inlay 2 furthermore comprises a spacer 6. The spacer 6 surrounds the core element 4 at least partially. The damper inlay 2 furthermore comprises a damping body 8. The damping body 8 is configured for damping radial loads. The damping body 8 radially surrounds the spacer 6. The damper inlay 2 furthermore comprises a first damping element 10 and a second damping element 12. The first axial damping element 10 abuts against a first axial contact surface 14 of the damping body 8. The second axial damping element 12 abuts against a second axial contact surface 16 of the damping body 8.

The first axial contact surface 14 is arranged opposite from the second axial contact surface 16. The damper inlay 2 furthermore comprises a sleeve 24. Said sleeve 24 radially surrounds the damping body 8. The first axial damping element 10 and the second axial damping element 12 is made of microcellular polyurethane, in particular volume compressible microcellular polyurethane.

The axial damping elements 10, 12 are bonded to the damping body 8. Furthermore, the damping body 8 comprises a centering bead 30, which surrounds each of the axial contact surfaces 14, 16. The centering bead 30 is configured for centering the first or second damping element 10, 12 relative to the damping body 8. The damping body 8 is molded around the spacer 6.

The spacer 6 comprises an upper section 26 and a lower section 27. The upper section 26 and the lower section 27 contact each other at a contact surface 28. The upper section 26 and the lower section 27 furthermore comprise clips 60. The clips 60 fit into the bores 58 of the bore ring 57 (see Figs. 1b and 1c). In the perspective of Fig. 1a only the clips 60 of the upper section 26 are shown due to the chosen sectional plane. As can be obtained from Figs. 1b and 1c, however, also the lower section 27 comprises clips 60 that fit into the bores 58 of the bore ring 57. A clip 60 from the upper section 26 and the lower section 27, alternately engages the bores 58.

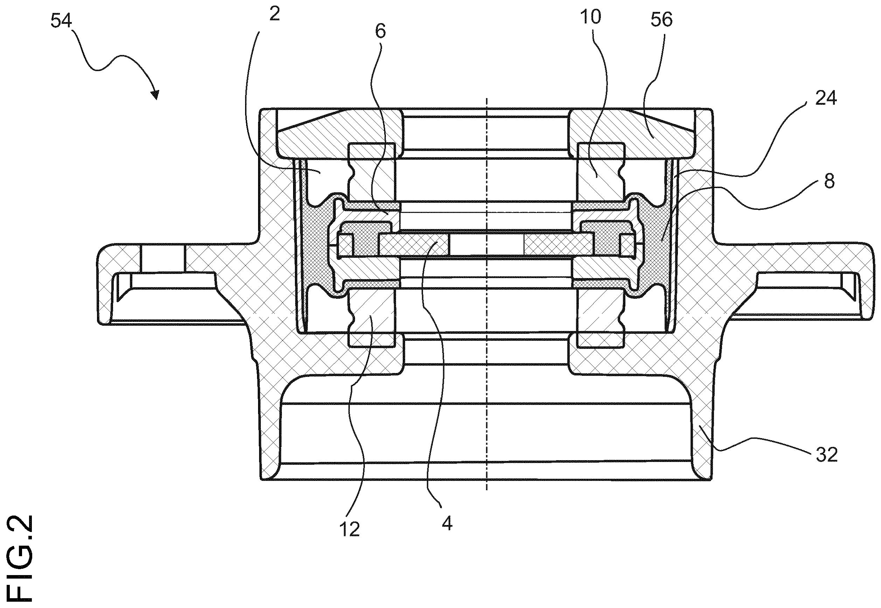

Fig. 2 shows a damper arrangement 54 for a vehicle. The damper arrangement 54 comprises a damper housing 32. The damper housing 32 is configured for accommodating a damper inlay 2. The damper arrangement 54 furthermore comprises a damper inlay 2, which has been described in detail with regard to fig. 1. The damper inlay 2 is pre-compressed by means of a damper cover 56.

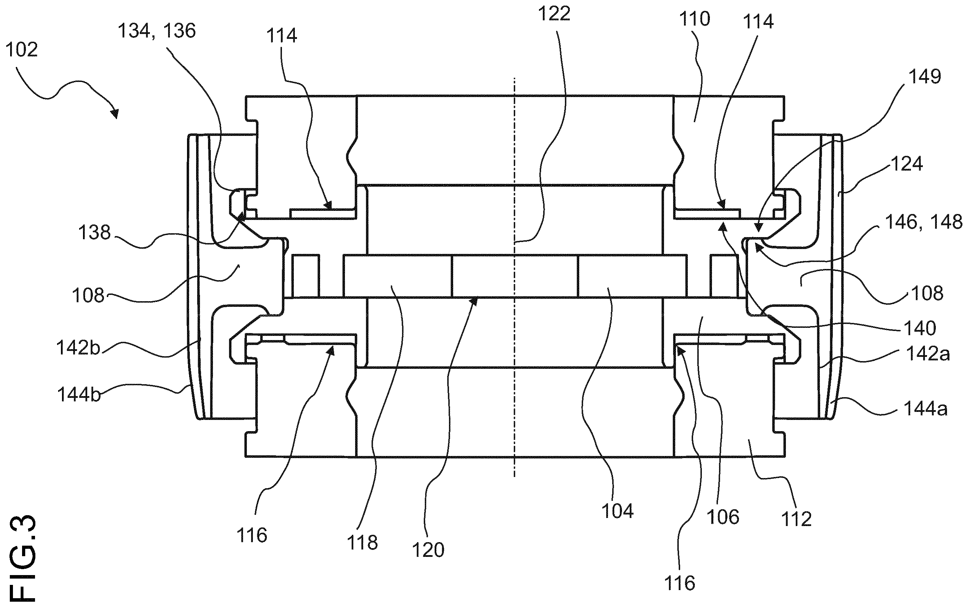

Fig. 3 shows an alternative embodiment of a damper inlay 102. The damper inlay 102 comprises a core element 104. The core element 104 is formed as a disc 118, in particular as a washer 118. The core element 104 comprises a centrally arranged opening 120, said opening 120 extending along a longitudinal axis 122 of the damper inlay 102. The damper inlay 102 furthermore comprises a spacer 106. The spacer 106 surrounds the core element 104 at least partially. The damper inlay 102 furthermore comprises a damping body 108. The damping body 108 is configured for damping radial loads. The damper inlay 102 furthermore comprises a first axial damping element 110 und a second axial damping element 112. The first axial damping element 110 abuts against a first axial contact surface 114 of the spacer 106. The second axial damping element 112 abuts against a second axial contact surface 116 of the spacer 106. The first axial contact surface 114 is arranged opposite from the second axial contact surface 116. The damper inlay 102 furthermore comprises a sleeve 124. The sleeve 124 radially surrounds the damping body 108.

The spacer 106 is molded around the core element 104. The spacer 106 comprises fastening means 134. The fastening means 134 are configured for attaching the first and second axial damping elements 110, 112 to the spacer 106. The fastening means 134 comprise a clip 136. The first and second axial damping elements 110, 112 comprise a radial protrusion 138. The radial protrusion 138 is configured for providing a form-fit connection with the clip 136. The first axial contact surface 114 and the second axial contact surface 116 comprises a wavelike surface 140. The damping body 108 comprises two half shells 142a, 142b. The sleeve 124 comprises two half shells 144a, 144b. The half shells 144a, 144b of the sleeve 124 and the half shell 142a, 142b of the damping body 108 are splashed together, vulcanized or molded, in particular injection molded. The spacer 106 furthermore comprises a half shell fastening means 146. The half shell fastening means 146 is configured for fastening the half shells 142a, 142b of the damping body 108 to the spacer 106. The half shell fastening means 146 comprise a nob 148 that engages with a groove 149 of the damping body 108.

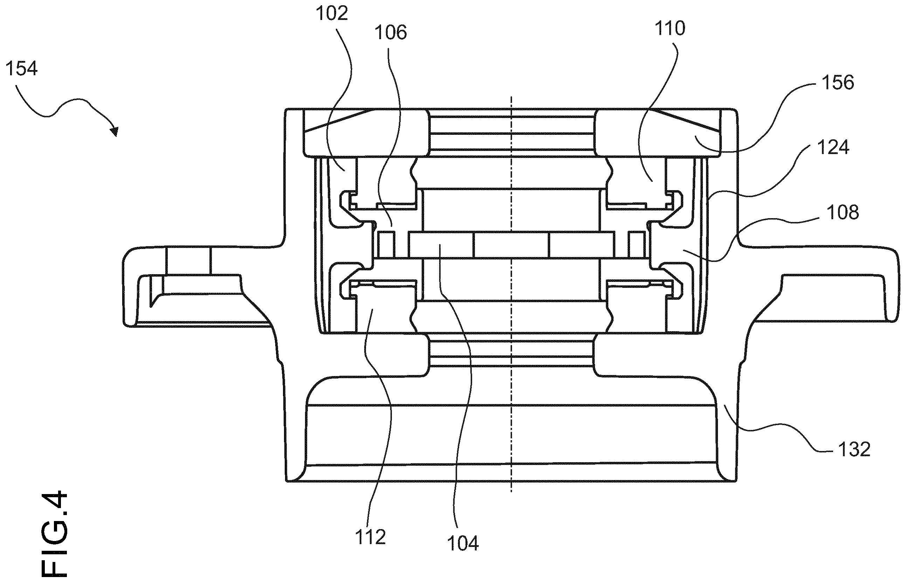

Fig. 4 shows a damper arrangement 154 for a vehicle. The damper arrangement 154 comprises a damper housing 132. The damper housing 132 is configured for accommodating a damper inlay 102. The damper arrangement 154 furthermore comprises a damper inlay 102, which has been described in detail with regard to fig. 3. The damper inlay 102 is precompressed by means of a damper cover 156.

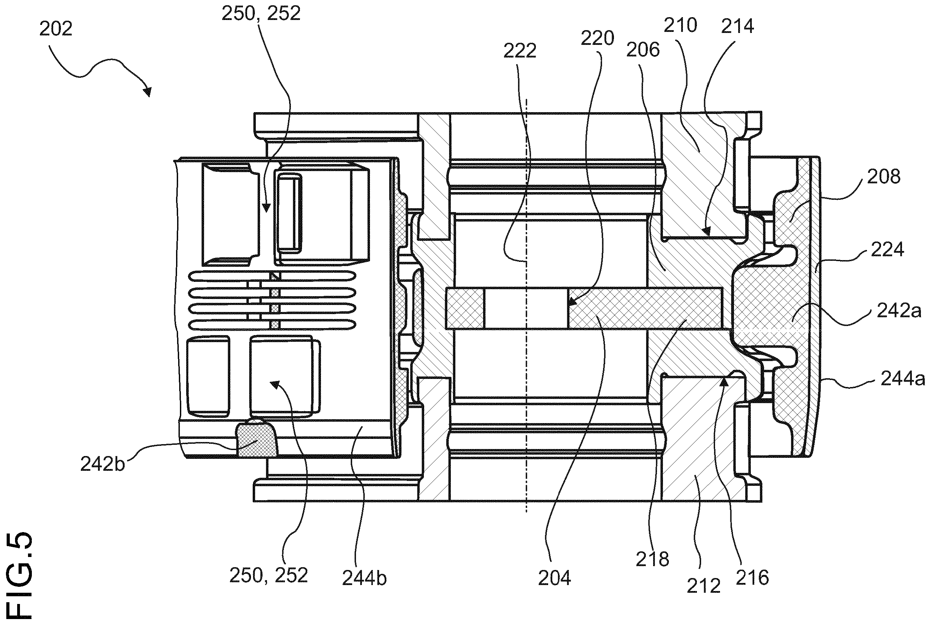

Fig. 5 shows a damper inlay 202. The damper inlay 202 comprises a core element 204 and a spacer 206. The spacer 206 surrounds a core element 204. The damper inlay 202 moreover comprises a damping body 208. The damping body 208 is configured for damping radial loads. The damping body 208 radially surrounds the spacer 206. The damper inlay 202 furthermore comprises a first axial damping element 210 and a second axial damping element 212. The first axial damping element 210 abuts against a first axial contact surface 214 of the spacer 206. The second axial damping element 212 abuts a second axial contact surface 216 of the spacer 206. The first axial contact surface 214 is arranged opposite from the second axial contact surface 216.

The core element 204 is formed as a disc 218. The core element 204 comprises a centrally arranged opening 220. The opening 220 extends along a longitudinal axis 222 of the damper inlay 202. The damper inlay 202 furthermore comprises a sleeve 224. The sleeve 224 surrounds the damping body 208 radially.

The spacer 206 is molded around the core element 204. The damping body 208 comprises two half shells 242a, 242b. The sleeve 224 comprises two half shells 244a, 244b. Corresponding half shells 244a, 244b of the sleeve 202 and half shells 242a, 242b of the damping body 208 are splashed together, vulcanized or molded, in particular injection molded. The half shells 244a, 244b comprise an attachment means 250. The attachment means 250 is configured for attaching the half shells 244a, 244b of the sleeve 224 to one another. The attachment means 250 comprise a clip 252. The clip 252 is configured to attach the sleeve half shells 244a, 244b to one another.

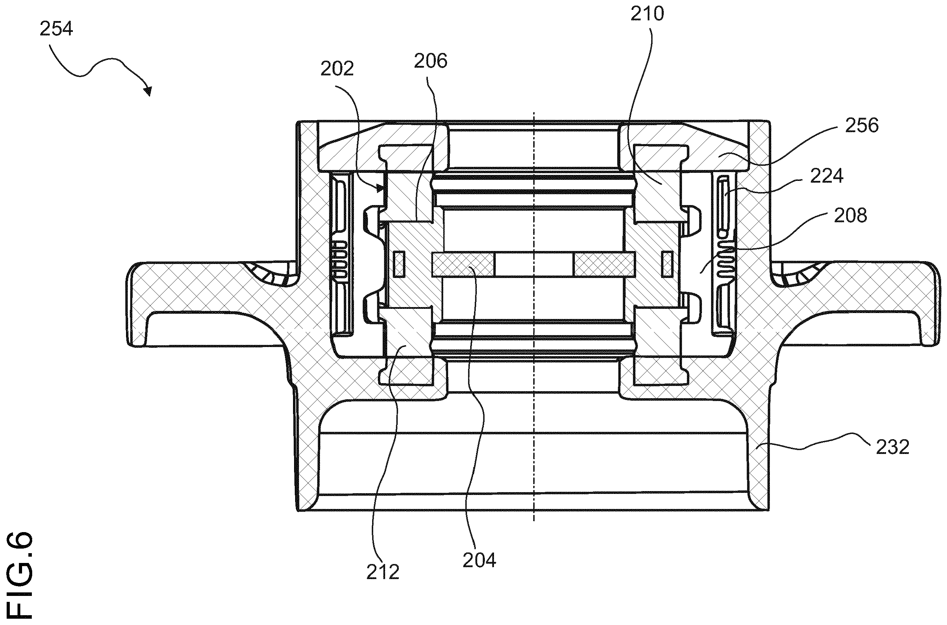

Fig. 6 shows a damper arrangement 254 for a vehicle. The damper arrangement 254 comprises a damper housing 232. The damper housing 232 is configured for accommodating a damper inlay 202. The damper arrangement 254 furthermore comprises a damper inlay 202, which has been described in detail with regard to fig. 5. The damper inlay 202 is precompressed by means of a damper cover 256.

### List of references

- 2: damper inlay
- 4: core element
- 6: spacer
- 8: damping body
- 10: first axial damping element
- 12: second axial damping element
- 14: first axial contact surface of damping body
- 16: second axial contact surface of damping body
- 18: disc / washer
- 20: centrally arranged opening
- 22: longitudinal axis of the damper inlay
- 24: sleeve
- 26: upper section of spacer
- 27: lower section of spacer
- 28: contact surface
- 30: centering bead
- 32: damper housing
- 54: damper arrangement
- 56: damper cover
- 57: bore ring
- 58: bore
- 60: clip
- 102: damper inlay
- 104: core element
- 106: spacer
- 108: damping body
- 110: first axial damping element
- 112: second axial damping element
- 114: first axial contact surface of spacer
- 116: second axial contact surface of spacer
- 118: disc / washer
- 120: centrally arranged opening
- 122: longitudinal axis of the damper inlay
- 124: sleeve
- 132: damper housing
- 134: fastening means of spacer
- 136: clip
- 138: radial protrusion
- 140: wavelike surface
- 142a: damping body half shell
- 142b: damping body half shell
- 144a: sleeve half shell
- 144b: sleeve half shell
- 146: half shell fastening means
- 148: nob
- 149: groove
- 154: damper arrangement
- 156: damper cover
- 202: damper inlay
- 204: core element
- 206: spacer
- 208: damping body
- 210: first axial damping element
- 212: second axial damping element
- 214: first axial contact surface of spacer
- 216: second axial contact surface of spacer
- 218: disc / washer
- 220: centrally arranged opening
- 222: longitudinal axis of the damper inlay
- 224: sleeve
- 232: damper housing
- 242a: damping body half shell
- 242b: damping body half shell
- 244a: sleeve half shell
- 244b: sleeve half shell
- 250: attachment means of sleeve half shell
- 252: clip of attachment means
- 254: damper arrangement
- 256: damper cover

## Claims

1. A damper inlay (2, 102, 202) for a vehicle, the damper inlay (2, 102, 202) comprising:
A core element (4, 104, 204),
a damping body (8, 108, 208) for damping radial loads,
a first and a second axial damping element (10, 12, 110, 112, 210, 212) **characterized by** a spacer (6, 106, 206), wherein said spacer (6, 106, 206) surrounds the core element (4, 104, 204) at least partially,
wherein said damping body (8, 108, 208) radially surrounds the spacer (6, 106, 206),
wherein the first axial damping element (10, 110, 210) abuts against a first axial contact surface (14, 114, 214) of the spacer (6, 106, 206) or the damping body (8, 108, 208) and the second axial damping element (12, 112, 212) abuts against a second axial contact surface (16, 116, 216) of the spacer (6, 106, 206) or the damping body (8, 108, 208), wherein the first axial contact surface (14, 114, 214) is arranged opposite from the second axial contact surface (16, 116, 216),

2. The damper inlay (2, 102, 202) according to claim 1,
**characterized by** a sleeve (24, 124, 224), said sleeve (24, 124, 224) radially surrounding the damping body (8, 108, 208).

3. The damper inlay (2, 102, 202) according to any of the preceding claims,
wherein at least one of the first axial damping element (10, 110, 210) and the second axial damping element (12, 112, 212) comprises or is made of microcellular polyurethane, in particular volume compressible microcellular polyurethane.

4. The damper inlay (2, 102, 202) according to any of the preceding claims,
wherein the sleeve (24, 124, 224) and/or the spacer (6, 106, 206) comprises or is made of from one of the following materials: molding plastic materials, in particular polyamide or polypropylene, fiber reinforced plastic, in particular carbon fiber reinforced plastic or glass fiber reinforced plastic,
and/or wherein the damping body (8, 108, 208) comprises or is made of Polyurethane (PUR) or thermoplastic polyurethane (TPU).

5. The damper inlay (2, 102, 202) according to any of the preceding claims,
wherein the spacer (6, 106, 206) is molded around the core element (4, 104, 204).

6. The damper inlay (2) according to any of the preceding claims,
wherein the first axial damping element (10) abuts against the first axial contact surface (14) of the damping body (8) and the second axial damping element (12) abuts against the second axial contact surface (16) of the damping body (8).

7. The damper inlay (2) according to claim 6,
wherein the spacer (6) comprises an upper section (26) and a lower section (27), wherein the upper section (26) and/or the lower section (27) comprise at least one clip (60) for clamping the upper section (26) and/or the lower section (27) to at least one bore (58) arranged in the core element (4).

8. The damper inlay (2) according to any of claims 6 or 7,
wherein the damping body (8) is molded around the spacer (6) and/or
wherein one or both of the axial damping elements (10, 12) are bonded to the damping body (8).

9. The damper inlay (2) according to any of claims 6 - 8,
wherein the damping body (8) comprises a centering bead (30) which surrounds at least one of the axial contact surfaces (14, 16), wherein said centering bead (30) is configured for centering the first or second damping element (10, 12) relative to the damping body (8).

10. The damper inlay (102, 202) according to any of claims 1 - 5,
wherein the first axial damping element (110, 210) abuts against the first axial contact surface (114, 214) of the spacer (106, 206) and the second axial damping element (112, 212) abuts against the second axial contact surface (116, 216) of the spacer (106, 206).

11. The damper inlay (102) according to claim 10,
wherein the spacer (106) comprises fastening means (134), said fastening means (134) being configured for attaching the first and/or second axial damping element (110, 112) to the spacer (106).

12. The damper inlay (102) according to claim 11,
wherein the fasting means (134) comprise a clip (136) and wherein the first and/or second axial damping element (110, 112) comprises a radial protrusion (138), said radial protrusion (138) being configured for providing a form-fit connection with said clip (136).

13. The damper inlay (102) according to any of claims 10 - 12,
wherein the first axial contact surface (114) and/or the second axial contact surface (116) comprises a wavelike surface (140).

14. The damper inlay (102, 202) according to claim 13,
wherein the half shell (144a, 144b, 244a, 244b) of the sleeve (124, 202) and the half shell (142a, 142b, 242a, 242b) of the damping body (108, 208) are splashed together,
and/or wherein the spacer (106) comprises a half shell fastening means (146), and wherein the half shell fastening means (146) is configured for fastening the half shells (142a, 142b) of the damping body (108) to the spacer (106).

15. The damper inlay (202) according to claim 13 or 14,
wherein the sleeve half shells (244a, 244b) comprise an attachment means (250) for attaching the half shells (244a, 244b) of the sleeve (224) to one another,
in particular wherein the attachment means (250) comprise a clip (252), and wherein the clip (252) is configured to attach the sleeve half shells (244a, 244b) to one another.

16. A damper arrangement (54, 154, 254) for a vehicle, the damper arrangement (54, 154, 254) comprising:
a damper housing (32, 132, 232) for accommodating a damper inlay (2, 102, 202),
and
at least one damper inlay (2, 102, 202),
**characterized in that** the damper inlay (2, 102, 202) is designed according to at least one of the claims 1-15.

## Patentansprüche

1. Eine Dämpfereinlage (2, 102, 202) für ein Fahrzeug, die Dämpfereinlage (2, 102, 202) umfassend:
Ein Kernelement (4, 104, 204),
einen Dämpfungskörper (8, 108, 208) zur Dämpfung radialer Lasten,
ein erstes und ein zweites axiales Dämpfungselement (10, 12, 110, 112, 210, 212),
**gekennzeichnet durch** einen Abstandshalter (6, 106, 206), wobei der Abstandshalter (6, 106, 206) das Kernelement (4, 104, 204) zumindest teilweise umgibt,
wobei der Dämpfungskörper (8, 108, 208) den Abstandshalter (6, 106, 206) radial umgibt,
wobei das erste axiale Dämpfungselement (10, 110, 210) an einer ersten axialen Kontaktfläche (14, 114, 214) des Abstandshalters (6, 106, 206) oder des Dämpfungskörpers (8, 108, 208) anliegt und das zweite axiale Dämpfungselement (12, 112, 212) an einer zweiten axialen Kontaktfläche (16, 116, 216) des Abstandshalters (6, 106, 206) oder des Dämpfungskörpers (8, 108, 208) anliegt, wobei die erste axiale Kontaktfläche (14, 114, 214) der zweiten axialen Kontaktfläche (16, 116, 216) gegenüberliegt.

2. Die Dämpfereinlage (2, 102, 202) nach Anspruch 1,
**gekennzeichnet durch** eine Hülse (24, 124, 224), wobei die Hülse (24, 124, 224) den Dämpfungskörper (8, 108, 208) radial umgibt.

3. Die Dämpfereinlage (2, 102, 202) nach einem der vorhergehenden Ansprüche, wobei mindestens eines der ersten axialen Dämpfungselemente (10, 110, 210) und des zweiten axialen Dämpfungselements (12, 112, 212) aus mikrozelligem Polyurethan besteht, insbesondere volumenkompressiblem mikrozelligem Polyurethan.

4. Die Dämpfereinlage (2, 102, 202) nach einem der vorhergehenden Ansprüche, wobei die Hülse (24, 124, 224) und/oder der Abstandshalter (6, 106, 206) aus einem der folgenden Materialien besteht: Kunststoff-Formmassen, insbesondere Polyamid oder Polypropylen, faserverstärkter Kunststoff, insbesondere kohlefaserverstärkter Kunststoff oder glasfaserverstärkter Kunststoff,
und/oder wobei der Dämpfungskörper (8, 108, 208) aus Polyurethan (PUR) oder thermoplastischem Polyurethan (TPU) besteht.

5. Die Dämpfereinlage (2, 102, 202) nach einem der vorhergehenden Ansprüche,
wobei der Abstandshalter (6, 106, 206) um das Kernelement (4, 104, 204) herum umspritzt ist.

6. Die Dämpfereinlage (2, 102) nach einem der vorhergehenden Ansprüche,
wobei das erste axiale Dämpfungselement (10) an der ersten axialen Kontaktfläche (14) des Dämpfungskörpers (8) anliegt und das zweite axiale Dämpfungselement (12) an der zweiten axialen Kontaktfläche (16) des Dämpfungskörpers (8) anliegt.

7. Die Dämpfereinlage (2) nach Anspruch 6,
wobei der Abstandshalter (6) einen oberen Abschnitt (26) und einen unteren Abschnitt (27) umfasst,
wobei der obere Abschnitt (26) und/oder der untere Abschnitt (27) mindestens einen Clip (60) umfasst, der dazu dient, den oberen Abschnitt (26) und/oder den unteren Abschnitt (27) an mindestens einer Bohrung (58) im Kernelement (4) zu befestigen.

8. Die Dämpfereinlage (2) nach einem der Ansprüche 6 oder 7,
wobei der Dämpfungskörper (8) um den Abstandshalter (6) herum umspritzt ist und/oder eines oder beide der axialen Dämpfungselemente (10, 12) mit dem Dämpfungskörper (8) verklebt sind.

9. Die Dämpfereinlage (2) nach einem der Ansprüche 6 bis 8,
wobei der Dämpfungskörper (8) einen Zentrierring (30) umfasst, der mindestens eine der axialen Kontaktflächen (14, 16) umgibt, wobei der Zentrierring (30) dazu ausgelegt ist, das erste oder zweite axiale Dämpfungselement (10, 12) relativ zum Dämpfungskörper (8) zu zentrieren.

10. Die Dämpfereinlage (102, 202) nach einem der Ansprüche 1 bis 5,
wobei das erste axiale Dämpfungselement (110, 210) an der ersten axialen Kontaktfläche (114, 214) des Abstandshalters (106, 206) anliegt und das zweite axiale Dämpfungselement (112, 212) an der zweiten axialen Kontaktfläche (116, 216) des Abstandshalters (106, 206) anliegt.

11. Die Dämpfereinlage (102) nach Anspruch 10,
wobei der Abstandshalter (106) Befestigungsmittel (134) umfasst, wobei die Befestigungsmittel (134) dazu ausgelegt sind, das erste und/oder zweite axiale Dämpfungselement (110, 112) am Abstandshalter (106) zu befestigen.

12. Die Dämpfereinlage (102) nach Anspruch 11,
wobei die Befestigungsmittel (134) einen Clip (136) umfassen und wobei das erste und/oder zweite axiale Dämpfungselement (110, 112) einen radialen Vorsprung (138) umfasst, wobei der radiale Vorsprung (138) dazu ausgelegt ist, eine Formschlussverbindung mit dem Clip (136) herzustellen.

13. Die Dämpfereinlage (102) nach einem der Ansprüche 10 bis 12,
wobei die erste axiale Kontaktfläche (114) und/oder die zweite axiale Kontaktfläche (116) eine wellenförmige Oberfläche (140) aufweist.

14. Die Dämpfereinlage (102, 202) nach Anspruch 13,
wobei die Halbschale (144a, 144b, 244a, 244b) der Hülse (124, 202) und die Halbschale (142a, 142b, 242a, 242b) des Dämpfungskörpers (108, 208) gemeinsam angespritzt sind,
und/oder wobei der Abstandshalter (106) ein Halbschalenbefestigungsmittel (146) umfasst, wobei das Halbschalenbefestigungsmittel (146) dazu ausgelegt ist, die Halbschalen (142a, 142b) des Dämpfungskörpers (108) am Abstandshalter (106) zu befestigen.

15. Die Dämpfereinlage (202) nach Anspruch 13 oder 14,
wobei die Halbschalen der Hülse (244a, 244b) ein Befestigungsmittel (250) zum Verbinden der Halbschalen (244a, 244b) der Hülse (224) miteinander umfassen,
wobei das Befestigungsmittel (250) insbesondere einen Clip (252) umfasst und der Clip (252) dazu ausgelegt ist, die Halbschalen (244a, 244b) miteinander zu verbinden.

16. Eine Dämpferanordnung (54, 154, 254) für ein Fahrzeug, die Dämpferanordnung (54, 154, 254) umfassend:
ein Dämpfergehäuse (32, 132, 232) zur Aufnahme einer Dämpfereinlage (2, 102, 202), und
mindestens eine Dämpfereinlage (2, 102, 202),
**dadurch gekennzeichnet, dass** die Dämpfereinlage (2, 102, 202) gemäß mindestens einem der Ansprüche 1 bis 15 ausgestaltet ist.

## Revendications

1. Un insert amortisseur (2, 102, 202) pour un véhicule, l'insert amortisseur (2, 102, 202) comprenant :
Un élément central (4, 104, 204),
un corps d'amortissement (8, 108, 208) pour amortir des charges radiales,
un premier et un second élément d'amortissement axial (10, 12, 110, 112, 210, 212) **caractérisé par** une entretoise (6, 106, 206), ladite entretoise (6, 106, 206) entourant au moins partiellement l'élément central (4, 104, 204),
le corps d'amortissement (8, 108, 208) entourant radialement l'entretoise (6, 106, 206),
le premier élément d'amortissement axial (10, 110, 210) venant en appui contre une première surface de contact axiale (14, 114, 214) de l'entretoise (6, 106, 206) ou du corps d'amortissement (8, 108, 208) et le second élément d'amortissement axial (12, 112, 212) venant en appui contre une seconde surface de contact axiale (16, 116, 216) de l'entretoise (6, 106, 206) ou du corps d'amortissement (8, 108, 208),
la première surface de contact axiale (14, 114, 214) étant disposée en vis-à-vis de la seconde surface de contact axiale (16, 116, 216).

2. L'insert amortisseur (2, 102, 202) selon la revendication 1,
**caractérisé par** une douille (24, 124, 224), ladite douille (24, 124, 224) entourant radialement le corps d'amortissement (8, 108, 208).

3. L'insert amortisseur (2, 102, 202) selon l'une quelconque des revendications précédentes,
au moins l'un du premier élément d'amortissement axial (10, 110, 210) et du second élément d'amortissement axial (12, 112, 212) étant constitué de polyuréthane microcellulaire, en particulier de polyuréthane microcellulaire compressible en volume.

4. L'insert amortisseur (2, 102, 202) selon l'une quelconque des revendications précédentes,
la douille (24, 124, 224) et/ou l'entretoise (6, 106, 206) étant constituée(s) ou réalisée(s) à partir d'un des matériaux suivants : matières plastiques moulées, en particulier polyamide ou polypropylène, plastique renforcé fibre, notamment plastique renforcé fibre de carbone ou plastique renforcé fibre de verre,
et/ou le corps d'amortissement (8, 108, 208) étant constitué de polyuréthane (PUR) ou d'élastomère thermoplastique (TPU).

5. L'insert amortisseur (2, 102, 202) selon l'une quelconque des revendications précédentes,
l'entretoise (6, 106, 206) étant moulée autour de l'élément central (4, 104, 204).

6. L'insert amortisseur (2, 102) selon l'une quelconque des revendications précédentes,
le premier élément d'amortissement axial (10) venant en appui contre la première surface de contact axiale (14) du corps d'amortissement (8) et le second élément d'amortissement axial (12) venant en appui contre la seconde surface de contact axiale (16) du corps d'amortissement (8).

7. L'insert amortisseur (2) selon la revendication 6,
l'entretoise (6) comprenant une section supérieure (26) et une section inférieure (27),
la section supérieure (26) et/ou la section inférieure (27) comprenant au moins un clip (60) destiné à fixer la section supérieure (26) et/ou la section inférieure (27) à au moins un alésage (58) disposé dans l'élément central (4).

8. L'insert amortisseur (2) selon l'une des revendications 6 ou 7,
le corps d'amortissement (8) étant moulé autour de l'entretoise (6) et/ou l'un ou les deux éléments d'amortissement axial (10, 12) étant collés au corps d'amortissement (8).

9. L'insert amortisseur (2) selon l'une quelconque des revendications 6 à 8,
le corps d'amortissement (8) comprenant une bague de centrage (30) qui entoure au moins l'une des surfaces de contact axiales (14, 16), ladite bague de centrage (30) étant configurée pour centrer le premier ou le second élément d'amortissement axial (10, 12) par rapport au corps d'amortissement (8).

10. L'insert amortisseur (102, 202) selon l'une quelconque des revendications 1 à 5,
le premier élément d'amortissement axial (110, 210) venant en appui contre la première surface de contact axiale (114, 214) de l'entretoise (106, 206) et le second élément d'amortissement axial (112, 212) venant en appui contre la seconde surface de contact axiale (116, 216) de l'entretoise (106, 206).

11. L'insert amortisseur (102) selon la revendication 10,
l'entretoise (106) comprenant des moyens de fixation (134), lesdits moyens de fixation (134) étant configurés pour fixer le premier et/ou le second élément d'amortissement axial (110, 112) à l'entretoise (106).

12. L'insert amortisseur (102) selon la revendication 11,
les moyens de fixation (134) comprenant un clip (136) et le premier et/ou le second élément d'amortissement axial (110, 112) comprenant une protrusion radiale (138), ladite protrusion radiale (138) étant configurée pour produire une liaison de type encliquetage avec le clip (136).

13. L'insert amortisseur (102) selon l'une quelconque des revendications 10 à 12,
la première surface de contact axiale (114) et/ou la seconde surface de contact axiale (116) comprenant une surface ondulée (140).

14. L'insert amortisseur (102, 202) selon la revendication 13,
la demi-coquille (144a, 144b, 244a, 244b) de la douille (124, 202) et la demi-coquille (142a, 142b, 242a, 242b) du corps d'amortissement (108, 208) étant aspergées ensemble,
et/ou l'entretoise (106) comprenant un moyen de fixation de demi-coquilles (146), ledit moyen de fixation de demi-coquilles (146) étant configuré pour fixer les demi-coquilles (142a, 142b) du corps d'amortissement (108) à l'entretoise (106).

15. L'insert amortisseur (202) selon la revendication 13 ou 14,
les demi-coquilles de la douille (244a, 244b) comprenant un moyen d'attache (250) pour fixer les demi-coquilles (244a, 244b) de la douille (224) l'une à l'autre,
le moyen d'attache (250) comprenant en particulier un clip (252), ledit clip (252) étant configuré pour fixer les demi-coquilles (244a, 244b) l'une à l'autre.

16. Un agencement amortisseur (54, 154, 254) pour un véhicule, l'agencement amortisseur (54, 154, 254) comprenant :
un boîtier amortisseur (32, 132, 232) pour loger un insert amortisseur (2, 102, 202), et
au moins un insert amortisseur (2, 102, 202),
**caractérisé en ce que** l'insert amortisseur (2, 102, 202) est conçu selon au moins l'une des revendications 1 à 15.
